(19) Europäisches Patentamt
European Patent Office
Office européen des brevets

(11) **EP 1 710 547 B1**

(12) **FASCICULE DE BREVET EUROPEEN**

(45) Date de publication et mention de la délivrance du brevet:
**16.03.2016 Bulletin 2016/11**

(51) Int Cl.:
***G01G 19/07*** *(2006.01)*   ***G01M 1/12*** *(2006.01)*

(21) Numéro de dépôt: **06290495.8**

(22) Date de dépôt: **29.03.2006**

(54) **Dispositif et procédé de détermination du poids et/ ou de la position du centre de gravité d'un aéronef.**

Vorrichtung und Verfahren zur Bestimmung des Gewichtes und/oder der Schwerpunktlage eines Flugzeuges.

Device and method for determining the weight and/or the centre of gravity of an aircraft.

(84) Etats contractants désignés:
**DE ES FR GB IT**

(30) Priorité: **04.04.2005 FR 0503316**

(43) Date de publication de la demande:
**11.10.2006 Bulletin 2006/41**

(73) Titulaire: **MESSIER-BUGATTI**
**78140 Vélizy Villacoublay (FR)**

(72) Inventeur: **Pradier, Jean-Clair**
**78140 Velizy Villacoublay (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**WO-A-95/02167      WO-A-2004/074787**
**WO-A-2004/102144    GB-A- 2 205 411**
**US-A- 5 205 514      US-A- 5 410 109**
**US-B1- 6 415 242**

**Description**

L'invention concerne en général un procédé de détermination de différentes grandeurs telles que le poids et la position du centre de gravité d'un aéronef reposant sur le sol.

Plus précisément, l'invention concerne, selon un premier aspect, un procédé de détermination du poids et/ou d'une grandeur caractéristique du centrage d'un aéronef reposant sur le sol par une pluralité de trains, chaque train comprenant au moins un élément de structure présentant un niveau de contraintes variable en fonction de la fraction du poids de l'aéronef transmise par ledit train au sol, ce procédé comprenant les étapes suivantes :

a/ mesure sur chaque train d'au moins un paramètre représentatif du niveau de contrainte dudit élément ;
b/ évaluation de la grandeur caractéristique et/ou du poids en fonction des paramètres mesurés à l'étape a/.

Des procédés de ce type sont connus de l'état de la technique, comme par exemple US 6 415 242 B2, US 5 205 514 A, les contraintes mécaniques subies par les éléments de structure étant obtenues en mesurant des microdéplacements, représentatifs des contraintes du matériau des éléments d'après les lois d'élasticité.

Ces procédés présentent le défaut d'être difficiles à mettre en oeuvre. Les moyens de mesure utilisés sont lourds et/ou difficiles à implanter dans les trains des avions existants.

Dans ce contexte, la présente invention a pour but de proposer un procédé et des moyens de mise en oeuvre qui puissent ne pas alourdir l'avion et être simples à implanter.

A cette fin, le procédé de l'invention, du type précité, est essentiellement caractérisé en ce qu'au moins un paramètre mesuré à l'étape a/ est une caractéristique magnétique ou électrique de l'élément de structure du train.

Dans un mode de réalisation de l'invention, la caractéristique magnétique ou électrique mesurée est une caractéristique choisie dans le groupe consistant en la perméabilité magnétique, la conductivité électrique et la permittivité électrique du matériau constituant l'élément de structure.

Avantageusement, la caractéristique magnétique ou électrique est mesurée à l'aide d'au moins un capteur à courant de Foucault.

Par exemple, l'étape b/ comprend une sous-étape b1/ d'évaluation de la fraction du poids de l'aéronef transmise par chaque train au sol en fonction des paramètres mesurés à l'étape a/, et une sous-étape b2/ de détermination de la position du centre de gravité de l'aéronef en fonction des fractions évaluées à la sous-étape b1/.

Dans ce cas, la fraction du poids de l'aéronef transmise par chaque train est évaluée en fonction de la caractéristique magnétique ou électrique mesurée à l'étape a/ à l'aide d'une fonction de transfert.

Avantageusement, la caractéristique magnétique ou électrique est mesurée suivant une seule direction selon laquelle le niveau de contraintes dans l'élément de structure varie en fonction de la fraction du poids de l'aéronef transmise au sol par ledit train.

Dans ce cas, on mesure sur l'élément de structure à l'étape a/ la caractéristique magnétique ou électrique suivant au moins une autre direction prédéterminée et/ou la variation de la caractéristique magnétique ou électrique résultant de l'effort de torsion et du cisaillement imposé à l'élément de structure, ces mesures étant utilisées pour affiner l'évaluation de la grandeur représentative effectuée à l'étape b/.

Selon un second aspect, l'invention concerne un dispositif de détermination du poids et/ou d'une grandeur caractéristique du centrage d'un aéronef reposant sur le sol par une pluralité de trains, chaque train comprenant au moins un élément de structure présentant un niveau de contraintes variable en fonction de la fraction du poids de l'aéronef transmise par ledit train au sol, ce dispositif comprenant sur chaque train au moins un capteur de mesure d'un paramètre représentatif du niveau de contrainte dudit élément et des moyens pour déterminer la grandeur caractéristique en fonction des paramètres mesurés, caractérisé en ce que le capteur est propre à mesurer comme paramètre représentatif une caractéristique magnétique ou électrique de l'élément de structure du train.

Selon un aspect avantageux de l'invention, le capteur est propre à mesurer une caractéristique magnétique ou électrique choisie dans le groupe consistant en la perméabilité magnétique, la conductivité électrique et la permittivité électrique du matériau constituant l'élément de structure.

De préférence, le capteur de mesure de la caractéristique magnétique ou électrique est un capteur à courant de Foucault.

Par exemple, le dispositif comprend des moyens pour évaluer la fraction du poids de l'aéronef transmise par chaque train au sol en fonction des paramètres mesurés, et des moyens pour évaluer la position du centre de gravité de l'aéronef en fonction des fractions évaluées.

Dans ce cas, les moyens pour déterminer la fraction du poids de l'aéronef transmise par chaque train comprennent au moins une fonction de transfert.

Selon un troisième aspect, l'invention concerne un aéronef comprenant une pluralité de trains aptes à reposer sur le sol en supportant le poids de l'aéronef et un dispositif de détermination du poids et/ou d'une grandeur caractéristique du centrage de l'aéronef présentant les caractéristiques ci-dessus, chaque train comprenant au moins un élément de structure présentant un niveau de contraintes variable en fonction de la fraction du poids de l'aéronef transmise par ledit train au sol.

D'autres caractéristiques et avantages de l'invention ressortiront clairement de la description qui en est faite ci-dessous, à titre indicatif et nullement limitatif, en référence aux figures annexées, parmi lesquelles :

- la figure 1 est une vue en perspective d'un avion équipé d'un dispositif de détermination de son poids et/ou d'une grandeur caractéristique de son équilibrage conforme à l'invention,
- la figure 2 est une vue simplifiée suivant la direction longitudinale d'une partie d'un train d'atterrissage de l'avion de la figure 1, montrant les capteurs du dispositif de détermination,
- la figure 3 est une coupe du train d'atterrissage de la figure 2 dans un plan vertical transversal,
- la figure 4 est une représentation schématique du dispositif de détermination de la figure 1,
- la figure 5 est une vue de dessus du train d'atterrissage des figures 2 et 3, montrant différentes possibilités d'implantation des capteurs, et
- la figure 6 est un logigramme illustrant les différentes étapes du procédé de détermination du poids et de la position du centre de gravité d'un aéronef à l'aide du dispositif de la figure 4.

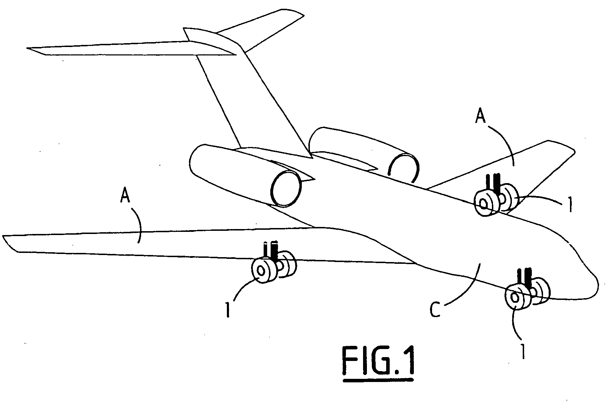

Un aéronef équipé d'un dispositif permettant de déterminer le poids et la position du centre de gravité de l'aéronef lorsque celui-ci repose sur le sol est représenté sur la figure 1. Cet aéronef est typiquement un avion.

Le dispositif permet également d'accéder à la répartition du poids de l'aéronef entre les différents trains supportant cet aéronef.

Le dispositif s'applique au cas d'un avion immobile sur le sol ou roulant lentement à la surface du sol. Cet avion comprend typiquement un fuselage C allongé longitudinalement et délimitant le cockpit ainsi que la cabine réservée aux passagers, deux ailes A disposées de part et d'autre du fuselage C et trois trains d'atterrissage 1 disposés sous l'avion.

Le train avant est disposé sous une partie avant du fuselage C et les deux trains arrière sont disposés sous les deux ailes A de l'avion.

L'avion repose sur le sol par l'intermédiaire des trois trains 1, qui reprennent chacun une fraction du poids de l'avion, et transmettent ce poids au sol.

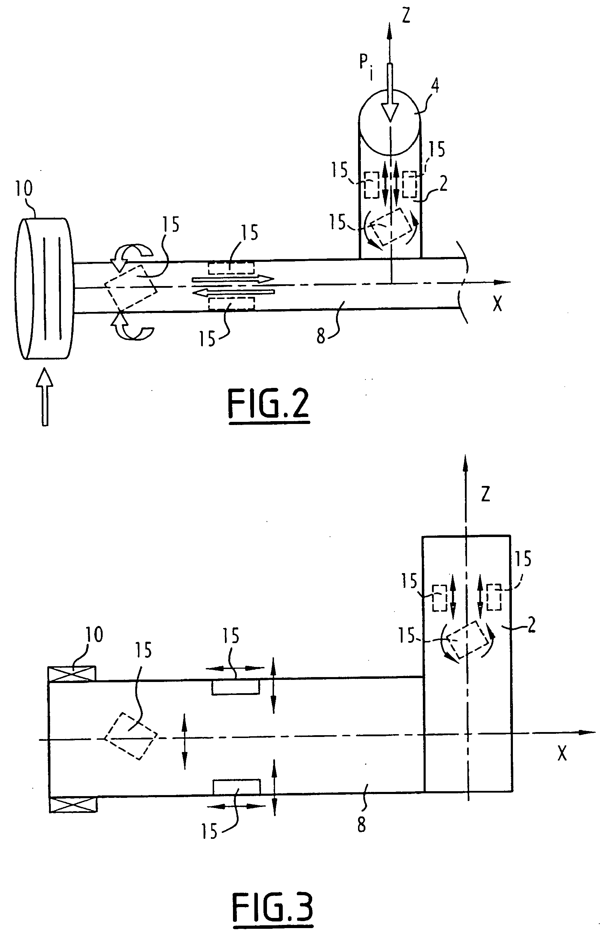

Comme on le voit sur les figures 2, 3 et 5, chaque train 1 comprend une jambe de force verticale 2 montée pivotante par une extrémité supérieure 4 sur le fuselage, une poutre longitudinale 6 rigidement fixée à une extrémité inférieure de la jambe verticale 2 opposé au fuselage, et trois essieux 8 transversaux montés sur la poutre longitudinale 6. Le train comprend encore six roues 10 montées aux extrémités des essieux 8. Le train repose sur le sol par l'intermédiaire des roues 10.

Les éléments de structure du train tels que la poutre longitudinale 6, les essieux 8 ou la jambe de force 2 présentent des niveaux de contraintes mécaniques variables en fonction de la fraction du poids de l'avion reprises par le train 1. En particulier, le niveau de contraintes suivant une direction prédéterminée transversale est fonction de la fraction du poids de l'avion repris par le train 1.

Le dispositif de détermination du poids et/ou de la position du centre de gravité de l'aéronef comprend, pour chaque train, un dispositif 11 de mesure d'un paramètre représentatif du niveau de contrainte selon la direction prédéterminée transversale dans un élément de structure du train, ici un essieu 8, et des moyens de calcul 13 pour déterminer le poids et la position du centre de gravité en fonction des paramètres mesurés.

Le paramètre mesuré est une caractéristique magnétique ou électrique de l'élément de structure du train, choisie parmi la perméabilité magnétique, la conductivité électrique ou la permittivité électrique du matériau constituant l'élément de structure.

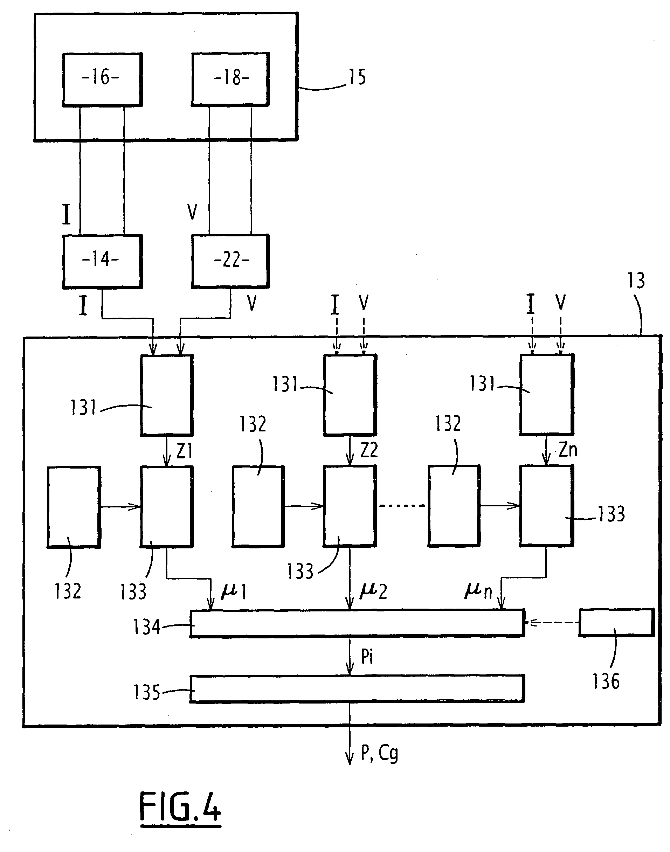

De manière particulièrement avantageuse, le dispositif de mesure 11 comprend (voir figure 4) un générateur de courant 14, un capteur à courant de Foucault 15 pourvu d'un circuit primaire 16 alimenté par le générateur de courant 14 et d'au moins un circuit secondaire 18, et des moyens 22 de mesure de la tension aux bornes du circuit secondaire 18.

Ce capteur est disposé à la surface de l'élément de structure sur lequel doit être effectué la mesure, plaqué contre cet élément de structure.

Le générateur de courant 14 est apte à exciter le circuit primaire 16 du capteur 15 avec un courant I de fréquence donnée. Le circuit primaire 16 est apte à générer, quand il est excité par le générateur, un champ magnétique de répartition spatiale déterminée dépendant de la répartition du courant I et donc de la géométrie du circuit primaire. Ce champ magnétique primaire génère un courant induit dans l'élément de structure, et ces courants induits, ou courants de Foucault, vont donner naissance à un champ magnétique secondaire. Ce champ magnétique secondaire a une répartition qui varie dans le temps et qui s'oppose à la variation du champ magnétique primaire qui lui a donné naissance.

L'intensité et la profondeur de pénétration des courants induits dans l'élément de structure dépendent des paramètres suivants :

- des propriétés physiques du matériau (conductivité électrique $\sigma$ et perméabilité magnétique $\mu$),

- de la fréquence f de travail du capteur,
- de la présence éventuellement de défauts dans le matériau,
- de la géométrie du matériau,
- de la qualité du couplage entre le matériau et le circuit inductif.

On peut exprimer mathématiquement la profondeur de pénétration $\delta$ par la formule suivante :

$$\delta = \frac{1}{\sqrt{\pi f \mu \sigma}} \ .$$

Le circuit secondaire 18 du capteur 15 est sensible à la variation du champ magnétique. Les variations sont dues aux variations des contraintes mécaniques appliquées à l'élément de structure. Les variations de ce champ qui sont dues aux défauts du matériau et à sa géométrie sont compensées grâce à des étalonnages du capteur 15. En effet, le dispositif subit trois étalonnages :

- un étalonnage initial du train et de l'avion au zéro (contrainte minimum) et à pleine échelle (contrainte maximum),
- un étalonnage au zéro avant chaque vol,
- une pesée de l'avion tous les cinq ans, au zéro et à pleine échelle.

Les circuits secondaires du capteur 15 sont aptes à être parcourus par un courant électrique induit créé par les variations du champ magnétique. Les variations de tension aux bornes du circuit secondaire sont fonction des variations du champ magnétique.

Les moyens de calcul 13 comprennent pour chaque train un premier module 131 apte à évaluer, en fonction de l'intensité I du courant fourni au circuit primaire 16 du capteur 15 correspondant et en fonction de la tension V collectée aux bornes du circuit secondaire 18 du même capteur 15, une impédance Z = V/I, une première mémoire 132 stockant les caractéristiques magnétiques ou électriques de l'élément de structure en fonction du module et de la phase de l'impédance électrique Z, et un second module 133 apte à déterminer la caractéristique magnétique ou électrique $\mu$i de l'élément de structure du train en fonction de l'impédance Z déterminée par le premier module 131 et du contenu de la mémoire 132.

Les moyens de calculs 13 comprennent encore un troisième module 134 apte à déterminer la fraction Pi du poids de l'avion supportée par chaque train en fonction des caractéristiques magnétiques ou électriques $\mu$i déterminées par les seconds modules 133, et un quatrième module 135 apte à déterminer la position du centre de gravité de l'avion et le poids total de l'avion en fonction des fractions Pi calculées par le troisième module 134.

Les moyens de calcul 13 sont constitués d'un calculateur spécifique pour le dispositif de détermination de la position du poids et du centre de gravité de l'aéronef, ou sont intégrés à un autre calculateur de l'avion.

On notera que, généralement, chaque train est équipé de deux capteurs 15, mesurant la caractéristique magnétique ou électrique de l'élément de structure suivant la direction prédéterminée.

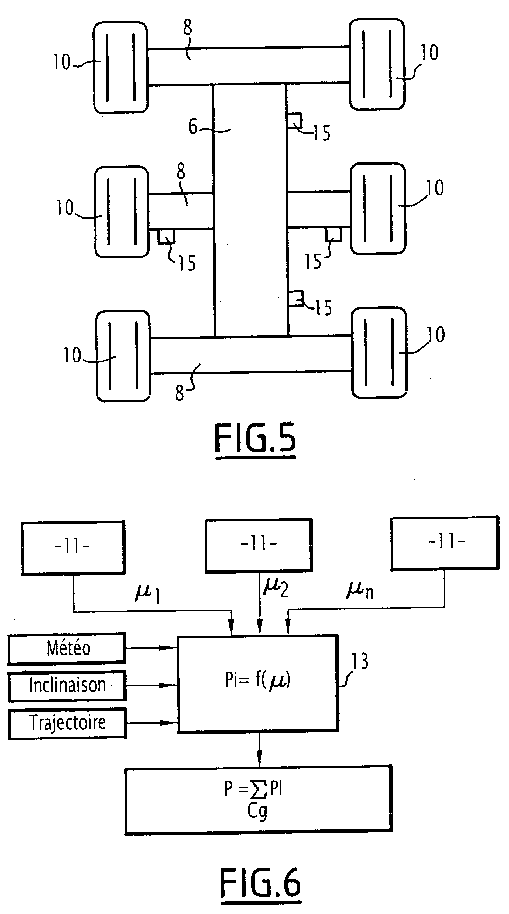

Comme le montre la figure 5, ces capteurs 15 peuvent être disposés en différents endroits, le long de la poutre longitudinale 6 ou le long des essieux 8.

En variante, chaque train peut être équipé, en plus du capteur mesurant la caractéristique magnétique ou électrique suivant la direction prédéterminée, de plusieurs autres capteurs. Ces capteurs mesurent les caractéristiques magnétiques ou électriques suivant d'autres directions, et/ou les variations de ces caractéristiques magnétiques ou électriques résultant de l'effort de torsion et du cisaillement. Ces efforts sont imposés à l'élément de structure par le poids de l'avion. Ces mesures sont utilisées pour corriger la mesure de la caractéristique magnétique ou électrique suivant la direction prédéterminée transversale.

Cette correction est particulièrement utile quand les capteurs 15 mesurant la caractéristique magnétique ou électrique suivant la direction prédéterminée sont disposés dans une zone subissant des contraintes non seulement dans cette direction prédéterminée mais encore dans d'autres directions.

On va maintenant décrire, en référence à la figure 6, le procédé de détermination de la position du centre de gravité de l'avion. On mesure d'abord, à une première étape a/, pour chaque train de l'avion, la caractéristique magnétique ou électrique $\mu$i de l'élément de structure de ce train selon la direction prédéterminée, à l'aide du dispositif de mesure 11.

Pour cela, on excite le circuit primaire 16 du capteur 15, et on mesure la tension aux bornes du circuit secondaire 18 du même capteur 15.

On évalue ensuite l'impédance Z = V/I. Cette impédance est caractérisée par sa phase Arg Z, et par son module |Z|.

En fonction du module et de la phase de l'impédance électrique calculée par les moyens de calcul, on détermine la caractéristique magnétique ou électrique $\mu$i recherchée de l'élément de structure.

Le cas échéant, dans une étape a'/, on corrige la valeur de la caractéristique $\mu i$ en fonction des mesures effectuées avec les capteurs mesurant les caractéristiques magnétiques ou électriques suivant d'autres directions, ou mesurant leurs variations résultant d'une torsion ou d'un cisaillement.

Puis, à une seconde étape b/, on évalue la position du centre de gravité de l'avion en fonction des caractéristiques magnétiques ou électriques ($\mu_1$, $\mu_2$, ..., $\mu_n$) des éléments de structure des différents trains de l'avion mesurées à l'étape a/. L'étape b/ se décompose en deux sous-étapes : une sous-étape b1/ d'évaluation de la fraction Pi du poids de l'avion transmise par chaque train au sol en fonction des caractéristiques magnétiques ou électriques mesurées à l'étape a/ et une seconde sous-étape b2/ de détermination de la position du centre de gravité Cg de l'avion en fonction des fractions évaluées à la sous-étape b1/.

La fraction Pi du poids de l'aéronef transmise par chaque train est évaluée en fonction des caractéristiques magnétiques ou électriques $\mu_i$ mesurées à l'étape a/ à l'aide d'une ou plusieurs fonctions de transfert. Ces fonctions de transfert sont prédéterminées et sont stockées dans une seconde mémoire 136 des moyens de calcul 13 (figure 4). Elles prennent en compte un certain nombre de paramètres tels que des paramètres météorologiques, l'inclinaison de la piste ou la trajectoire prévue de l'avion, de manière à augmenter la précision finale de l'évaluation de la répartition du poids de l'avion sur les trains.

En variante, on utilise des tables ou de cartographies à la place des fonctions de transferts.

Une fois connu le poids repris par chaque train de l'avion, on peut déterminer le poids total P de l'avion de manière très simple, en additionnant les poids supportés par chaque train.

On détermine ensuite la position du centre de gravité de l'avion, par une formule simplifiée, en calculant le barycentre des positions des trois trains d'atterrissage affectées d'un poids correspondant à la fraction du poids total de l'avion repris par chacun des trains. La position longitudinale du centre de gravité de l'avion Cgl s'exprime donc par la formule suivante :

$$Cgl = \Sigma li \, \frac{Pi}{P}$$

où:

li est la position longitudinale de chacun des trains i,
Pi est la fraction du poids total de l'avion repris par le train i.

La position transversale du centre de gravité de l'avion s'exprime par la formule suivante :

$$Cgt = \Sigma ti \, \frac{Pi}{P}$$

où :

ti représente la position transversale de chacun des trains i.

On conçoit donc bien que le procédé et le dispositif décrits ci-dessus présentent de multiples avantages.

Le dispositif permet de déterminer de façon très simple, en continu, la position du centre de gravité de l'avion.

Ceci est particulièrement intéressant sur des avions de transport gros porteurs, notamment de fret. En effet, la surchargé de l'avion ou un mauvais positionnement des palettes peut modifier son comportement aérodynamique une fois en vol ou lors du décollage. Le dispositif permet d'optimiser la masse embarquée ainsi que son centrage, et de s'assurer qu'elle reste dans la limite du fonctionnement de l'avion.

Le dispositif de l'invention permet de détecter en temps réel les cas où la répartition de la masse transportée n'est pas uniforme, et de corriger sa répartition à bord de l'avion. Par ailleurs, le dispositif permet de connaître en permanence le poids de l'avion et de s'assurer qu'il reste dans la limite de fonctionnement autorisée pour celui-ci.

On notera que l'invention s'applique au cas d'un avion comprenant moins ou plus de trois trains d'atterrissage, par exemple cinq trains d'atterrissage.

De même, chaque train d'atterrissage peut comprendre moins ou plus de trois essieux, par exemple un ou deux essieux, et donc moins ou plus de six roues, par exemple deux roues ou quatre roues.

**Revendications**

1.  Procédé de détermination du poids et/ou d'une grandeur caractéristique du centrage d'un aéronef reposant sur le sol par une pluralité de trains (1), chaque train (1) comprenant au moins un élément de structure (6, 8) présentant un niveau de contraintes variable en fonction de la fraction (Pi) du poids (P) de l'aéronef transmise par ledit train (1) au sol, ce procédé comprenant les étapes suivantes :

    a/ mesure sur chaque train (1) d'au moins un paramètre représentatif du niveau de contrainte dudit élément ;
    b/ évaluation de la grandeur caractéristique et/ou du poids en fonction des paramètres mesurés à l'étape a/ ;
    **caractérisé en ce qu'**au moins un paramètre mesuré à l'étape a/ est une caractéristique magnétique ou électrique de l'élément de structure (6, 8, 2) du train.

2.  Procédé suivant la revendication 1, **caractérisé en ce que** la caractéristique magnétique ou électrique mesurée est une caractéristique choisie dans le groupe consistant en la perméabilité, magnétique ($\mu$), la conductivité électrique ($\sigma$) et la permittivité électrique du matériau constituant l'élément de structure (6, 8, 2).

3.  Procédé suivant la revendication 1 ou 2, **caractérisé en ce que** la caractéristique magnétique ou électrique est mesurée à l'aide d'au moins un capteur à courant de Foucault (15).

4.  Procédé suivant l'une quelconque des revendications 1 à 3, **caractérisé en ce que** l'étape b/ comprend une sous-étape b1/ d'évaluation de la fraction (Pi) du poids de l'aéronef transmise par chaque train (1) au sol en fonction des paramètres mesurés à l'étape a/, et une sous-étape b2/ de détermination de la position du centre de gravité de l'aéronef en fonction des fractions (Pi) évaluées à la sous-étape b1/.

5.  Procédé suivant la revendication 4, **caractérisé en ce que** la fraction (Pi) du poids de l'aéronef transmise par chaque train (1) est évaluée en fonction de la caractéristique magnétique ou électrique mesurée à l'étape a/à l'aide d'une fonction de transfert.

6.  Procédé suivant l'une quelconque des revendications 1 à 5, **caractérisé en ce que** la caractéristique magnétique ou électrique est mesurée suivant une seule direction selon laquelle le niveau de contraintes dans l'élément de structure (6, 8, 2) varie en fonction de la fraction (Pi) du poids de l'aéronef transmise au sol par ledit train.

7.  Procédé suivant la revendication 6, **caractérisé en ce qu'**on mesure sur l'élément de structure (6, 8, 2) à l'étape a/ la caractéristique magnétique ou électrique suivant au moins une autre direction prédéterminée et/ou la variation de la caractéristique magnétique ou électrique résultant de l'effort de torsion et du cisaillement imposé à l'élément de structure (6, 8, 12), ces mesures étant utilisées pour affiner l'évaluation de la grandeur représentative effectuée à l'étape b/.

8.  Dispositif de détermination du poids et/ou d'une grandeur caractéristique du centrage d'un aéronef reposant sur le sol par une pluralité de trains (1), chaque train (1) comprenant au moins un élément de structure (6, 8, 2) présentant un niveau de contraintes variable en fonction de la fraction (Pi) du poids de l'aéronef transmise par ledit train (1) au sol, ce dispositif comprenant sur chaque train (1) au moins un capteur de mesure (15) d'un paramètre représentatif du niveau de contrainte dudit élément et des moyens pour déterminer la grandeur caractéristique en fonction des paramètres mesurés, **caractérisé en ce que** le capteur est propre à mesurer comme paramètre représentatif une caractéristique magnétique ou électrique de l'élément de structure (6, 8, 2) du train (1).

9.  Dispositif suivant la revendication 8, **caractérisé en ce que** le capteur est propre à mesurer une caractéristique magnétique ou électrique choisie dans le groupe consistant en la perméabilité magnétique ($\mu$), la conductivité électrique ($\sigma$) et la permittivité électrique du matériau constituant l'élément de structure (6, 8, 2).

10. Dispositif suivant la revendication 8 ou 9, **caractérisé en ce que** le capteur de mesure (15) de la caractéristique magnétique ou électrique est un capteur à courant de Foucault.

11. Dispositif suivant l'une quelconque des revendications 8 à 10, **caractérisé en ce qu'**il comprend des moyens pour évaluer la fraction (Pi) du poids de l'aéronef transmise par chaque train (1) au sol en fonction des paramètres mesurés, et des moyens pour évaluer la position du centre de gravité de l'aéronef en fonction des fractions évaluées.

12. Dispositif suivant la revendication 11, **caractérisé en ce que** les moyens pour déterminer la fraction (Pi) du poids de l'aéronef transmise par chaque train comprennent au moins une fonction de transfert.

13. Aéronef comprenant une pluralité de trains (1) aptes à reposer sur le sol en supportant le poids de l'aéronef et un dispositif de détermination du poids et/ou d'une grandeur caractéristique du centrage de l'aéronef selon l'une quelconque des revendications 8 à 12, chaque train (1) comprenant au moins un élément de structure (6, 8, 2) présentant un niveau de contraintes variable en fonction de la fraction (Pi) du poids de l'aéronef transmise par ledit train au sol.

**Patentansprüche**

1. Verfahren zur Bestimmung des Gewichts und / oder einer charakteristischen Größe der Schwerpunktlage eines Flugzeugs, welches auf dem Boden mittels einer Vielzahl von Fahrwerken (1) ruht, wobei jedes Fahrwerk (1) mindestens ein Strukturelement (6, 8) aufweist, welches ein Belastungsniveau aufweist, welches in Abhängigkeit von dem Teil (Pi) des Gewichts (P) des Flugzeugs variabel ist, welcher durch das Fahrwerk (1) auf den Boden übertragen wird, wobei das Verfahren die folgenden Schritte aufweist:

   a/ Messen bei jedem Fahrwerk (1) mindestens eines Parameters, welcher für das Belastungsniveau des Elements repräsentativ ist,
   b/ Bewerten der charakteristischen Größe und / oder des Gewichts in Abhängigkeit von den im Schritt a/ gemessenen Parametern,
   **dadurch gekennzeichnet, dass** mindestens ein im Schritt a/ gemessener Parameter eine magnetische oder elektrische Charakteristik des Strukturelements (6, 8, 2) des Fahrwerks ist.

2. Verfahren nach Anspruch 1, **dadurch gekennzeichnet, dass** die gemessene magnetische oder elektrische Charakteristik eine Charakteristik ist ausgewählt aus der Gruppe bestehend aus der magnetischen Permeabilität ($\mu$), der elektrischen Leitfähigkeit ($\sigma$) und der elektrischen Permittivität des Materials, welches das Strukturelement (6, 8, 2) bildet.

3. Verfahren nach Anspruch 1 oder 2, **dadurch gekennzeichnet, dass** die magnetische oder elektrische Charakteristik unter Verwendung von mindestens einem Wirbelstromsensor (15) gemessen wird.

4. Verfahren nach einem der Ansprüche 1 bis 3, **dadurch gekennzeichnet, dass** der Schritt b/ einen Teilschritt b1/ des Bewertens des Teils (Pi) des Gewichts des Flugzeugs, welcher durch jedes Fahrwerk (1) auf den Boden übertragen wird, in Abhängigkeit von den im Schritt a/ gemessenen Parametern, und einen Teilschritt b2/ des Bestimmens der Position des Schwerpunkts des Flugzeugs in Abhängigkeit von den im Teilschritt b1/ bewerteten-Teilen (Pi) aufweist.

5. Verfahren nach Anspruch 4, **dadurch gekennzeichnet, dass** der Teil (Pi) des Gewichts des Flugzeugs, welcher durch jedes Fahrwerk (1) übertragen wird, in Abhängigkeit von der magnetischen oder elektrischen Charakteristik gemessen im Schritt a/ mittels einer Übertragungsfunktion bewertet wird.

6. Verfahren nach einem der Ansprüche 1 bis 5, **dadurch gekennzeichnet, dass** die magnetische oder elektrische Charakteristik einer einzigen Richtung entlang gemessen wird, in der das Belastungsniveau in dem Strukturelement (6, 8, 2) in Abhängigkeit von dem Teil (Pi) des Gewichts des Flugzeugs variiert, welcher durch das Fahrwerk auf den Boden übertragen wird.

7. Verfahren nach Anspruch 6, **dadurch gekennzeichnet, dass** bei dem Strukturelement (6, 8, 2) im Schutt a/ die magnetische oder elektrische Charakteristik mindestens einer anderen vorbestimmten Richtung entlang und / oder die Variation der magnetischen oder elektrischen Charakteristik gemessen wird, welche aus der die Torsion- und Scherung-Belastung, die auf das Strukturelement (6, 8, 12) ausgeübt wird, resultiert, wobei diese Messungen verwendet werden, um die im Schritt b/ durchgeführte Bewertung der repräsentativen Größe zu verfeinern.

8. Vorrichtung zur Bestimmung des Gewichts und / oder einer charakteristischen Größe der Schwerpunktlage eines Flugzeugs, welches auf dem Boden mittels einer Vielzahl von Fahrwerken (1) ruht, wobei jedes Fahrwerk (1) mindestens ein Strukturelement (6, 8) aufweist, welches ein Belastungsniveau aufweist, welches in Abhängigkeit von dem Teil (Pi) des Gewichts (P) des Flugzeugs variabel ist, welcher durch das Fahrwerk auf den Boden übertragen wird, wobei die Vorrichtung an jedem Fahrwerk (1) mindestens einen Messsensor (15) für einen Parameter, welcher repräsentativ für das Belastungsniveau des Elements ist, und Mittel zur Bestimmung der charakteristischen Größe in Abhängigkeit von den gemessenen Parametern aufweist, **dadurch gekennzeichnet, dass** der Sensor eingerichtet ist, um als repräsentativen Parameter eine magnetische oder elektrische Charakteristik des Strukturelements (6, 8, 2) des Fahrwerks (1) zu messen.

9. Vorrichtung nach Anspruch 8, **dadurch gekennzeichnet, dass** der Sensor eingerichtet ist, um eine magnetische oder elektrische Charakteristik zu messen, welche ausgewählt ist aus der Gruppe bestehend aus der magnetischen Permeabilität ($\mu$), der elektrischen Leitfähigkeit ($\sigma$) und der elektrischen Permittivität des Materials, welches das Strukturelement (6, 8, 2) bildet.

10. Vorrichtung nach Anspruch 8 oder 9, **dadurch gekennzeichnet, dass** der Messsensor (15) der magnetischen oder elektrischen Charakteristik ein Wirbelstromsensor ist.

11. Vorrichtung nach einem der Ansprüche 8 bis 10, **dadurch gekennzeichnet, dass** sie Mittel, um den Teil (Pi) des Gewichts des Flugzeugs, welcher durch jedes Fahrwerk (1) auf den Boden übertragen wird, in Abhängigkeit von den gemessenen Parametern zu bewerten, und Mittel aufweist, um die Position des Schwerpunkts des Flugzeugs in Abhängigkeit von den bewerteten Teilen zu bewerten.

12. Vorrichtung nach Anspruch 11, **dadurch gekennzeichnet, dass** die Mittel zur Bestimmung des Teils (Pi) des Gewichts des Flugzeugs, welcher durch jedes Fahrwerk übertragen wird, mindestens eine Übertragungsfunktion aufweisen.

13. Flugzeug aufweisend eine Vielzahl von Fahrwerken (1), welche geeignet sind, auf dem Boden zu ruhen unter Halten des Gewichts des Flugzeugs, und eine Vorrichtung zur Bestimmung des Gewichts und / oder einer charakteristischen Größe der Schwerpunktlage des Flugzeugs nach irgendeinem der Ansprüche 8 bis 12, wobei jedes Fahrwerk (1) mindestens ein Strukturelement (6, 8, 2) aufweist, welches ein Belastungsniveau aufweist, welches in Abhängigkeit von dem Teil (Pi) des Gewichts des Flugzeugs variabel ist, welcher durch das Fahrwerk auf den Boden übertragen wird.

## Claims

1. A method of determining the weight and/or a characteristic value of the position of the centre of gravity of an aircraft standing on the ground by means of a plurality of undercarriages (1), each undercarriage (1) comprising at least one structural element (6, 8) exhibiting a variable level of stresses depending on the fraction (Pi) of the weight (P) of the aircraft transmitted to the ground through said undercarriage (1), this method comprising the following steps:

   a/ measurement on each undercarriage (1) of at least one parameter representing the stress level of said element;
   b/ evaluation of the characteristic value and/or of the weight according to the parameters measured in step a/;
   **characterized in that** at least one parameter measured in step a/ is a magnetic or electrical characteristic of the structural element (6, 8, 2) of the undercarriage.

2. The method as claimed in claim 1, **characterized in that** the magnetic or electrical characteristic measured is a characteristic chosen from the group consisting of the magnetic permeability ($\mu$), the electrical conductivity ($\sigma$) and the electrical permittivity of the material constituting the structural element (6, 8, 2).

3. The method as claimed in claim 1 or 2, **characterized in that** the magnetic or electrical characteristic is measured by means of a Foucault current sensor (15).

4. The method as claimed in any one of claims 1 to 3, **characterized in that** step b/ comprises a sub-step b1/ of evaluation of the fraction (Pi) of the weight of the aircraft transmitted to the ground by each undercarriage (1) as a function of the parameters measured in step a/, and a sub-step b2/ of determining the position of the center of gravity of the aircraft as a function of the fractions (Pi) evaluated in sub-step b1/.

5. The method as claimed in claim 4, **characterized in that** the fraction (Pi) of the weight of the aircraft transmitted through each undercarriage (1) is evaluated as a function of the magnetic or electrical characteristic measured in step a/ by means of a transfer function.

6. The method as claimed in any one of claims 1 to 5, **characterized in that** the magnetic or electrical characteristic is measured in a single direction along which the level of stresses in the structural element (6, 8, 2) varies as a function of the fraction (Pi) of the weight of the aircraft transmitted to the ground through said undercarriage.

7. The method as claimed in claim 6, **characterized in that** there is measured on the structural element (6, 8, 2) in step a/ the magnetic or electrical characteristic in at least one other predetermined direction and/or the variation of the magnetic or electrical characteristic resulting from the torsion or shear force imposed on the structural element (6, 8, 2), these measurements being used to refine the evaluation of the representative value carried out in step b/.

8. A device for determining the weight and/or a characteristic value of the position of the centre of gravity of an aircraft standing on the ground by means of a plurality of undercarriages (1), each undercarriage (1) comprising at least one structural element (6, 8, 2) exhibiting a level of stresses that varies as a function of the fraction (Pi) of the weight of the aircraft transmitted to the ground through said undercarriage (1), this device comprising on each undercarriage (1) at least one sensor (15) for measuring a parameter representing the stress level of said element and means for determining the characteristic value as a function of the measured parameters, **characterized in that** the sensor is able to measure, as a representative parameter, a magnetic or electrical characteristic of the structural element (6, 8, 2) of the undercarriage (1).

9. The device as claimed in claim 8, **characterized in that** the sensor is able to measure a magnetic or electrical characteristic chosen from the group consisting of the magnetic permeability ($\mu$), the electrical conductivity ($\sigma$) and the electrical permittivity of the material constituting the structural element (6, 8, 2).

10. The device as claimed in claim 8 or 9, **characterized in that** the sensor (15) for measuring the magnetic or electrical characteristic is a Foucault current sensor.

11. The device as claimed in any one of claims 8 to 10, **characterized in that** it comprises means for evaluating the fraction (Pi) of the weight of the aircraft transmitted to the ground though each undercarriage (1) as a function of the measured parameters, and means for evaluating the position of the center of gravity of the aircraft as a function of the evaluated fractions.

12. The device as claimed in claim 11, **characterized in that** the means for determining the fraction (Pi) of the weight of the aircraft transmitted through each undercarriage comprise at least one transfer function.

13. An aircraft comprising a plurality of undercarriages (1) able to stand on the ground whilst supporting the weight of the aircraft and a device for determining the weight and/or a characteristic value of the position of the centre of gravity of the aircraft as claimed in any one of claims 8 to 12, each undercarriage (1) comprising at least one structural element (6, 8, 2) exhibiting a level of stresses that varies as a function of the fraction (Pi) of the weight of the aircraft transmitted to the ground through said undercarriage.

**FIG.1**

## FIG.2

## FIG.3

## FIG.4

## FIG.5

Météo

Inclinaison

Trajectoire

$P_i = f(\mu)$

$P = \sum P_i$
$C_g$

## FIG.6

**RÉFÉRENCES CITÉES DANS LA DESCRIPTION**

**Documents brevets cités dans la description**

- US 6415242 B2

- US 5205514 A